# EUROPEAN PATENT SPECIFICATION

(11) **EP 2 644 316 B1**
(45) Date of publication and mention of the grant of the patent: **07.08.2019**
(21) Application number: 11843684.9
(22) Date of filing: 01.11.2011
(51) Int. Cl.: B23Q 3/06, F15B 15/14, B25B 5/06, B25B 5/16, F02F 1/00, F15B 15/26

(54) **CYLINDER DEVICE WITH BOOST MECHANISM**
ZYLINDERVORRICHTUNG MIT EINEM VERSTÄRKUNGSMECHANISMUS
DISPOSITIF DE CYLINDRE ÉQUIPÉ D'UN MÉCANISME DE SURALIMENTATION

(30) Priority: 24.11.2010 JP 2010277451
(43) Date of publication of application: 02.10.2013
(73) Proprietor: Kosmek Ltd., Hyogo 651-2241 (JP)
(72) Inventor: YOKOTA, Hideaki, Kobe-shi Hyogo 651-2241 (JP)
(74) Representative: Dolleymores
(86) International application number: PCT/JP2011/006114
(87) International publication number: WO 2012/070189

(56) References cited:
- JP-A- 2001 025 932
- JP-A- 2007 268 625
- JP-A- 2007 268 625
- JP-A- 2009 255 219
- JP-A- 2009 255 219
- US-A- 4 881 745
- US-A1- 2002 030 316
- US-A1- 2006 131 803

## Description

The present invention relates to a cylinder device with a force multiplier and, more specifically, to a technology suitable to strongly fixing an object to be fixed such as a workpiece or a mold and retaining its fixed state.

Such a type of conventional cylinder device with a force multiplier is disclosed in Patent Literature 1 (Japanese Patent Application Publication, Tokukai, No. 2007-268625 A). The conventional technology is configured as follows:
A clamping rod serving as an output rod is inserted in a housing so as to be movable vertically. A first piston for rod is inserted in an upper part of the housing, and is fixed to the clamping rod. A first lock chamber and a first release chamber are formed above and below the first piston, respectively. A second piston for force multiplication is inserted in a lower part of the housing, and is fitted on the clamping rod so as to be movable vertically. A second lock chamber and a second release chamber are formed above and below the second piston, respectively.

In a case where the clamping rod is subjected to lock driving, the first piston and the second piston are driven downward by supplying compressed air into the first lock chamber and the second lock chamber. This first causes the first piston to drive the clamping rod downward during a low-load stroke of the lock driving, and then causes the second piston to drive the clamping rod in a force-multiplying manner via a force multiplier during a high-load stroke that follows the low-load stroke.

Conventionally, the force multiplier includes: an engagement groove provided in a lower portion of the clamping rod; and a plurality of claw members swingably supported by the lower part of the housing. During the force multiplication driving, a tapered surface of the second piston, which has been driven downward, causes the claw members to swing radially inward, so that the claw members engage with the engagement groove.

The conventional technology has the following problems:
During the force multiplication driving, the second piston, which has been driven downward, drives the clamping rod in a force-multiplying manner via the claw members and the engagement groove. Therefore, a great reaction force, generated during the force multiplication driving, acts upward from the engagement groove to the claw members, so that the claw members are strongly pulled upward. This requires a robust structure in which the claw members are swingably supported by the housing. Such a support structure is big and results in a bulky cylinder device.

Further, the conventional technology requires compartmentalization of the first release chamber formed below the first piston and the second lock chamber formed above the second piston, thus requiring a thick partition wall to be provided at a certain height of the housing. Such a housing is tall and results in an even bulkier cylinder device.

It is an object of the present invention to provide a small-sized cylinder device with a force multiplier.

The invention is defined in the independent claim

### Brief Description of Drawings

Figs. 1A through 1D are schematic views showing a first embodiment of the present invention. Fig. 1A is an elevational cross-sectional view of a cylinder device in a release state. Fig. 1B, which is similar to Fig. 1A, shows a state of the cylinder device at a final stage of a low-load stroke in lock driving of the cylinder device. Fig. 1C, which is similar to Fig. 1A, shows an initial state of force multiplication driving of the cylinder device. Fig. 1D, which is similar to Fig. 1A, shows a locked state of the cylinder device at a final stage of force multiplication driving.
Fig. 2, which is equivalent to Fig. 1C, shows a cylinder device according to a second embodiment of the present invention.
Figs. 3A through 3D show a third embodiment of the present invention. Fig. 3A, which is similar to Fig. 1A, shows a retreating state of a swivel clamping member provided in a cylinder device. Fig. 3B, which is equivalent to a state that is between the state shown in Fig. 1A and the state shown in Fig. 1B, shows a state of the clamping member having finished swiveling in lock driving of the cylinder device. Fig. 3C, which is similar to Fig. 1C, shows a state of the clamping member getting ready to be locked. Fig. 3D, which is similar to Fig. 1D, shows a locked state of the clamping member.
Fig. 4 is an enlarged view of a force multiplier provided in the third embodiment, the left half of Fig. 4 showing a release state, the right half of Fig. 4 showing a locked state.
Fig. 5, which is equivalent to the release state shown in the left half of Fig. 4, shows a modification of the force multiplier.

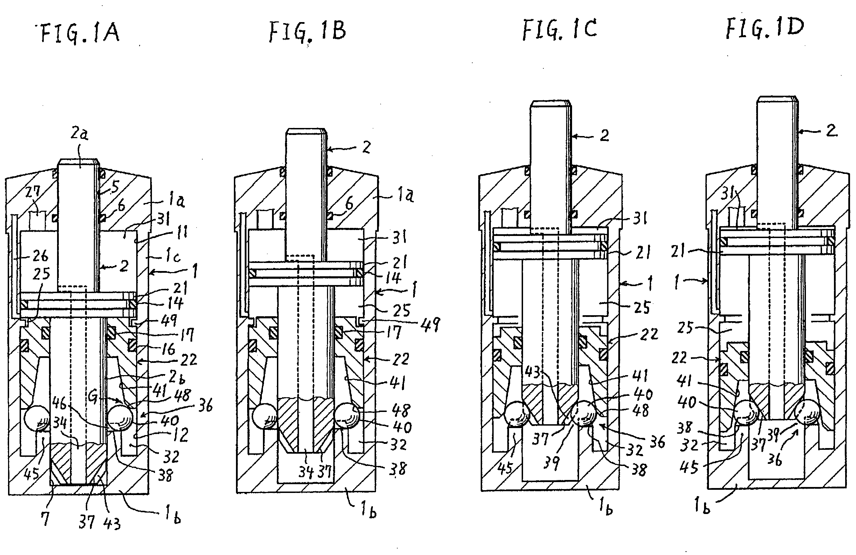

In order to attain the foregoing object, a cylinder device with a force multiplier in each of the first to third aspects below of the present invention is configured as shown in Figs. 1A through 1D, Fig. 2, or Figs. 3A through 3D.

In a first aspect of the present invention, a cylinder device having a force multiplier includes (i) an output rod 2 inserted in a housing 1 so as to be movable axially, (ii) a first piston 21 for rod, the first piston 21 being coupled to the output rod 2 in the housing 1, and (iii) a second piston 22 for force multiplication, the second piston 22 being arranged in the housing 1 in tandem with the first piston 21, the second piston 22 being fitted on the output rod 2 so as to be movable axially, the cylinder device being configured such that in lock driving of the output rod 2, (a) the first piston 21 drives the output rod 2 during a low-load stroke and (b) the second piston 22 carries out force multiplication driving of the output rod 2 by use of the force multiplier 36 during a high-load stroke that follows the low-load stroke, the cylinder device, further including: a lock chamber 25, arranged between the first piston 21 and the second piston 22, into and out of which a pressurized fluid is supplied and discharged, such that the first piston 21 and the second piston 22 are pushed in such directions as to be away from each other; a first release chamber 31 arranged such that the first piston 21 is pushed toward the second piston 22; and a second release chamber 32 arranged such that the second piston 22 is pushed toward the first piston 21, the force multiplier 36 causing (i) a first force, with which a pressurized fluid supplied into the lock chamber 25 pushes the second piston 22 in a direction away from the first piston 21, to be reversed to be a second force getting toward the first piston 21 and (ii) the second force to be subjected to force multiplication so as to be transmitted to the output rod 2.

The first aspect of the present invention brings about the following effects:
Supply of a pressurized fluid into the lock chamber provided between the first piston and the second piston can cause the first piston to be pushed toward one end side of the housing and cause the second piston to be pushed toward the other end side of the housing. Then, a force with which the pressurized fluid in the lock chamber to push the second piston toward the other end side is reversed via the force multiplier and then transmitted to the output rod. Therefore, a great reaction force, generated during force multiplication driving, acts on the housing from the output rod via the force multiplier. Therefore, instead of employing the conventional structure for receiving tensile force, the present invention can employ, as a structure for receiving a great reaction force generated during force multiplication driving, a structure for receiving compressive force. This makes it possible, as a result, to simply configure the receiving structure, thus making it possible to provide a small-sized cylinder device.

Further, since the lock chamber is formed between the first piston, and since the second piston and the first and second release chambers are formed on a side of the first piston which side faces outward and on a side of the second piston which side faces outward, respectively, the present invention does not require a thick partition wall to be provided at a certain height of the housing, unlike in the case of the conventional technology. Such a housing is short and results in an even smaller cylinder device.

In a second aspect of the present invention, a cylinder device having a force multiplier includes (i) an output rod 2 inserted in a housing 1 so as to be movable in a direction from a first end side to a second end side and vice versa, the first end side being one axial end side of the output rod 2, the second end side being the other axial end side of the output rod 2, (ii) a first piston 21 for rod, the first piston 21 being arranged in the housing 1 so as to be located at the first end side, the first piston 21 being coupled to the output rod 2, and (iii) a second piston 22 for force multiplication, the second piston 22 being arranged in the housing 1 so as to be located at the second end side, the second piston 22 being fitted on the output rod 2 so as to be movable axially, the cylinder device being configured such that in lock driving of the output rod 2, (a) the first piston 21 drives the output rod 2 during a low-load stroke and (b) the second piston 22 carries out force multiplication driving of the output rod 2 by use of the force multiplier 36 during a high-load stroke that follows the low-load stroke, the cylinder device, further including: a lock chamber 25, arranged between the first piston 21 and the second piston 22, into and out of which a pressurized fluid is supplied and discharged, such that the first piston 21 and the second piston 22 are pushed toward the first end side and the second end side, respectively; a first release chamber 31 arranged on a side of the first piston 21 which side faces toward the first end side, such that the first piston 21 is pushed toward the second end side; and a second release chamber 32 arranged on a side of the second piston 22 which side faces toward the second end side, such that the second piston 22 is pushed toward the first end side, the force multiplier 36 causing (i) a first force, with which a pressurized fluid supplied into the lock chamber 25 pushes the second piston 22 toward the second end side, to be transformed in a force-multiplying manner into a second force getting toward the first end side and (ii) the second force to be transmitted to the output rod 2.

The second aspect of the present invention brings about substantially the same effects as the first aspect of the present invention does.

In each of the aspects, the present invention is preferably configured such that a pressurized fluid is supplied into and discharged out of the first release chamber 31 and the second release chamber 32.

In this case, a return spring for releasing does not need to be mounted in each of the release chambers, so that a space in which to mount such a return spring can be omitted. This makes it possible to drastically reduce the height of the housing to make the cylinder device compact.

Further, the present invention is preferably configured such that the output rod 2 has a communicating hole 34 via which the first release chamber 31 and the second release chamber 32 are connected to each other, the communicating hole 34 being provided in the output rod 2.

In this case, a hole via which the two release chambers are connected to each other does not need to be provided in the barrel part of the housing, nor does a tube via which the two release chambers are connected to each other need to be provided outside the housing. This makes it possible to make the cylinder device even smaller.

Furthermore, the present invention is preferably configured to further include a specific component(s) described in each of the embodiments to be described.

### Description of Embodiments

Figs. 1A through 1D are schematic views showing a first embodiment of the present invention.

A structure of a cylinder device with a force multiplier will be first described with reference to Fig. 1A, which shows the cylinder device in a release state.

An output rod 2 is inserted in a housing 1 so as to be movable vertically. The housing 1 has an upper end wall (first end wall) 1a in which an upper hole 5 is provided, and has a lower end wall (second end wall) 1b in which a lower hole 7 is provided. The output rod 2 has an upper rod part 2a hermetically supported in the upper hole 5 via a sealing member 6. The output rod 2 has a lower rod part 2b supported in the lower hole 7 and is formed to be larger in diameter than the upper rod part 2a.

The housing 1 has a barrel part 1c. In the barrel part 1c, a first cylinder hole 11 and a second cylinder hole 12 are provided so that the first cylinder hole 11 is above the second cylinder hole 12, i.e., so that the second cylinder hole 12 is below the first cylinder hole 11. A first piston 21 for rod is hermetically inserted in the first cylinder hole 11 via a sealing member 14, and is fixed on the output rod 2. A second piston 22 for force multiplication is hermetically inserted in the second cylinder hole 12 via an outer sealing member 16, and is fitted on the output rod 2 via an inner sealing member 17 so as to be movable vertically.

Arranged between the first piston 21 and the second piston 22 is a lock chamber 25 into and out of which compressed air for locking can be supplied and discharged, via a lock supply and discharge passage 26 and a lock port (not illustrated).

A first release chamber 31 is arranged above the first piston 21, and a second release chamber 32 is arranged below the second piston 22. The first release chamber 31 and the second release chamber 32 communicate with each other via a communicating hole 34 formed in the output rod 2. This allows compressed air for releasing to be supplied into and discharged out of the first release chamber 31 and the second release chamber 32, via a release supply and discharge passage 27 and a release port (not illustrated).

In the second release chamber 32, the output rod 2 and the second piston 22 are provided with a force multiplier 36. The force multiplier 36 is configured such that a force, with which compressed air supplied into the lock chamber 25 pushes the second piston 22 downward, is (i) reversed to be a force exerted upward in a force-multiplying manner, and is (ii) then transmitted to the output rod 2.

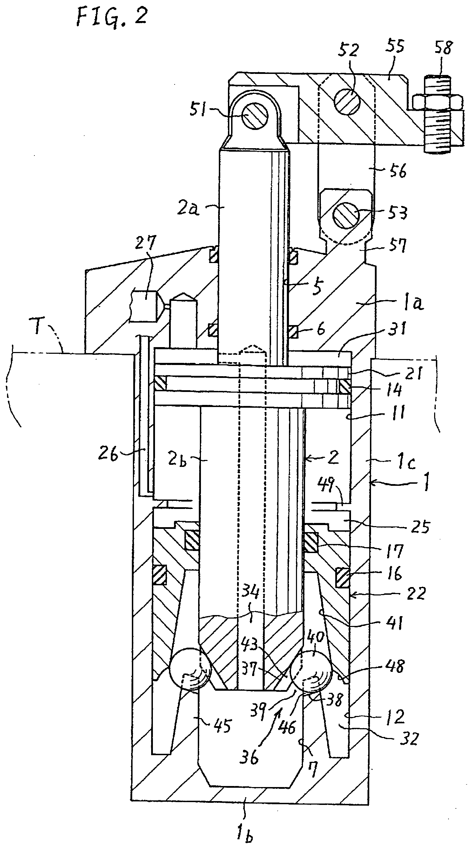

The force multiplier 36 is configured as shown in Fig. 1C or Fig. 2 (initial state of force multiplication driving) which will be described later. That is, the force multiplier 36 has a wedge space 39 which has an annular shape and which is formed between transmitting portions 37 provided at a lower end of the lower rod part 2b and receiving portions 38 provided in the lower end wall 1b, during the force multiplication driving, so as to get narrower as it extends radially inward. A plurality of engaging balls (engaging members) 40 put in the wedge space 39 at predetermined intervals circumferentially. A force-multiplying portion 41 is provided in the second piston 22 so as to push the engaging balls 40 radially inward. In further detail, each of these components is configured as below.

According to the first embodiment, four depressions 43 are provided, at substantially regular intervals along the circumferential direction, in an outer circumferential surface of the lower end of the lower rod part 2b. The depressions 43 have bottom walls that constitute the respective transmitting portions 37. Each of the transmitting portions 37 has a slope that gets closer to an axis of the output rod 2 as it extends downward.

Four transverse grooves 46 are provided circumferentially on top of a cylindrical part 45 projecting upward from the lower end wall 1b of the housing 1. The transverse grooves 46 have bottom walls that constitute the respective receiving portions 38.

The force-multiplying portion 41 is constituted by an inclined surface formed by an inner circumferential surface of the second piston 22. There is provided, below the force-multiplying portion 41, a press portion 48 that continues into the force-multiplying portion 41. The press portion 48 will be described later. The press portion 48 here is constituted by an inclined surface.

The cylinder device thus configured operates as follows:
In the release state shown in Fig. 1A, compressed air is discharged out of the lock chamber 25, and compressed air is supplied into the first release chamber 31 and the second release chamber 32. This causes (i) the compressed air in the second release chamber 32 to push the second piston 22 upward and (ii) the compressed air in the first release chamber 31 to push the first piston 21 downward.

In this case, a difference between an upward force acting on the second piston 22 and a downward force acting on the first piston 21 causes (i) a peripheral portion of an upper surface of the second piston 22 to be received by a stopper 49 provided at a certain height of the barrel part 1c of the housing 1 and (ii) a lower surface of the first piston 21 to be received by a central portion of the upper surface of the second piston 22. A predetermined gap G is formed between the press portion 48 of the second piston 22 and the engaging balls 40.

In a case where the cylinder device is subjected to lock driving, (i) the compressed air is discharged out of the first release chamber 31 and the second release chamber 32 and (ii) compressed air is supplied into the lock chamber 25, in the release state shown in Fig. 1A.

Then, the compressed air in the lock chamber 25 pushes the first piston 21 upward and pushes the second piston 22 downward. This causes, as shown in Fig. 1B (a final stage of a low-load stroke in lock driving), the press portion 48 of the second piston 22 (i) to be received by the receiving portions 38 of the lower end wall 1b via the engaging balls 40 and (ii) to push the engaging balls 40 radially inward, i.e., toward an outer circumferential surface of the output rod 2, so that the engaging balls 40 make contact with the outer circumferential surface. The compressed air in the lock chamber 25 causes the output rod 2 to move up, via the first piston 21, against a low-load caused by a frictional force generated by the contact, a frictional force generated by the sealing members 6, 14 and 17, and the like.

As the output rod 2 moves up, (i) the wedge space 39 is formed between the transmitting portions 37 provided in a lower portion of the output rod 2 and the receiving portions 38 provided in the lower end wall 1b

(see Fig. 1C) and (ii) the press portion 48 pushes out the engaging balls 40 toward the wedge space 39. It is now possible to start force multiplication driving.

Next, as shown in Fig. 1C (initial state of force multiplication driving), the output rod 2 further moves up, and causes an upper end of the output rod 2 to be received by a workpiece (not illustrated) so that a high load acts on the output rod 2, and the force-multiplying portion 41 of the second piston 22 pushes out the engaging balls 40 radially inward. This causes a downward thrust acting on the second piston 22 to be transformed, in a force-multiplying manner, into an upward force, via the force-multiplying portion 41, the engaging balls 40, the receiving portions 38, and the transmitting portions 37. In consequence, the output rod 2 is strongly driven upward.

Then, as shown in Fig. 1D (locked state at a final stage of force multiplication driving), the second piston 22 pushes, upward via the force multiplier 36, the output rod 2 which has been received by the workpiece (not illustrated) and is therefore prevented from moving up. This causes the output rod 2 to be strongly pushed upward by a resultant of (i) an upward force exerted by the force multiplier 36 and (ii) an upward force exerted by the first piston 21.

Note that, in a case where the force multiplier 36 has a coefficient of friction of 0.08 to 0.15, the "upward force exerted by the force multiplier 36" is approximately 2 to 3.5 times as strong as a "downward thrust of the second piston 22".

Note also that, in the locked state shown in Fig. 1D, a retaining force exerted by the force multiplier 36 (i.e., a force with which an external force acting on the output rod 2 prevents the locked state from being released) is approximately 5 to 10 times as strong as the "downward thrust of the second piston 22". This makes it possible to mechanically and strongly retain the locked state.

The downward thrust of the second piston 22 is reversed to be an upward thrust, via the force-multiplying portion 41, the engaging balls 40, the receiving portions 38, and the transmitting portions 37, and then the upward thrust is transmitted to the output rod 2. Therefore, a great reaction force, generated during force multiplication driving, acts as compressive force from the output rod 2 onto the lower end wall 1b of the housing 1, via the engaging balls 40 and the receiving portions 38. Accordingly, as is clear from Fig. 1D, such a great reaction force generated during force multiplication driving can be received by a simple structure in which the lower end wall 1b is provided with the cylindrical part 45 by which the compressive force is received. This makes it possible, as a result, to provide a small-sized cylinder device.

Furthermore, an angle of inclination between the press portion 48 and the axis of the output rod 2 is set to be greater than an angle of inclination between the force-multiplying portion 41 and the axis of the output rod 2. As such, a force with which the press portion 48 pushes the engaging balls 40 radially inward is smaller than a force with which the force-multiplying portion 41 pushes the engaging balls 40 radially inward. Since this causes, during the low-load stroke, a reduction in the frictional force generated by the contact between the outer circumferential surface of the output rod 2 and the engaging balls 2, the output rod 2 can smoothly move up.

In a case where the cylinder device is changed from the locked state shown in Fig. 1D to the release state shown in Fig. 1A, (i) the compressed air is discharged out of the lock chamber 25 and (ii) compressed air is supplied into the first release chamber 31 and the second release chamber 32, in the locked state shown in Fig. 1D.

In such a case, the compressed air in the release chamber 32 first causes the second piston 22 to move up with respect to the output rod 2 which has been prevented by the engaging balls 40 from moving down, and when the second piston 22 further moves up, the engaging balls 40 is caused to be changed to the state shown in Fig. 1B via the state shown in Fig. 1C. It is therefore possible to move down the output rod 2 and the first piston 21. Subsequently, the second piston 22, which has been moved up by the compressed air supplied into the second release chamber 32, is received by the stopper 49. After that, the first piston 21 causes the output rod 2 to move down. This ultimately causes the lower surface of the first piston 21 to make contact with the upper surface of the second piston 22 (see Fig. 1A (release state)).

At a termination stage of the moving down of the output rod 2, the aforementioned gap G, shown in Fig. 1A, is formed between the press portion 48 of the second piston 22 and the engaging balls 40. As such, there is little frictional force acting between the outer circumferential surface of the output rod 2 and the engaging balls 40. This allows the output rod 2 to smoothly move down.

In the first embodiment, examples of shapes of (i) the depressions 43 constituting the transmitting portions 37 and (ii) the transverse grooves 46 constituting the receiving portions 38 can encompass the shapes of a circular arc groove, a U-shaped groove, and a Gothic-arched groove. In this regard, the same applies to another embodiment and a modification that will be described later.

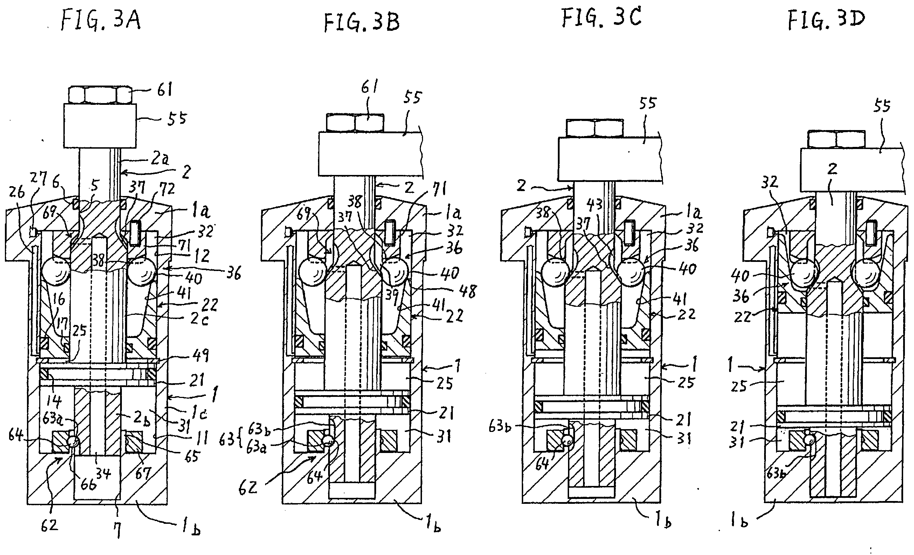

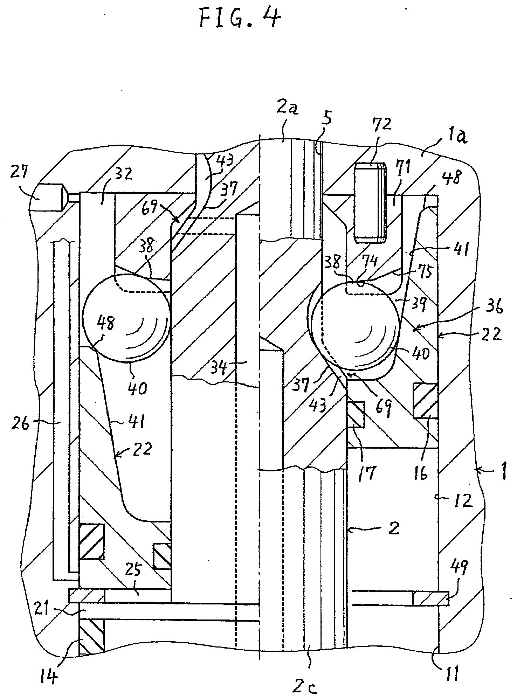

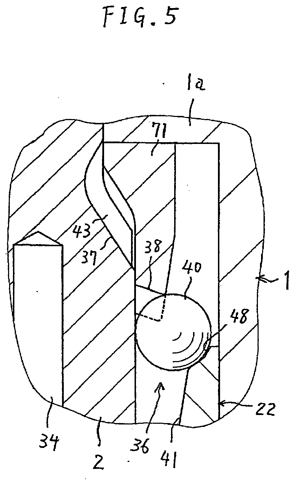

Fig. 2 shows a second embodiment of the present invention. Figs. 3A through Fig. 3D and Fig. 4 show a third embodiment of the present invention. Fig. 5 shows a modification of the force multiplier. In descriptions of the second and third embodiments and the modification, components identical (or similar) to the components described in the first embodiment will be given identical reference numerals and/or signs.

The second embodiment shown in Fig. 2 is an example cylinder device having a link clamping mechanism for fixing a workpiece (not illustrated). Fig. 2, which is equivalent to Fig. 1C, shows an initial state of force multiplication driving of the cylinder device.

The second embodiment shown in Fig. 2 differs from the first embodiment in terms of the following points.

The housing 1 is attached to a fixed base T such as a table. The output rod 2 has an upper portion (i) projecting upward from the upper end wall (first end wall) 1a of the housing 1 and (ii) supporting a left end of a clamping member 55 via a first pin 51 so that the clamping member 55 is vertically rotatable. A link member 56 has an upper portion which is rotatably supported, via a second pin 52, by a crosswise intermediate portion of the clamping member 55. The link member 56 has a lower portion which is rotatably supported by a supporting portion 57 via a third pin 53. The supporting portion 57 projects upward from the upper end wall 1a.

The press portion 48, provided as a lower portion of the second piston 22, is constituted by a circular arc surface in section, instead of the inclined surface of the first embodiment. The receiving portions 38, provided as an upper portion of the lower end wall (second end wall) 1b of the housing 1, are constituted by bottom walls of respective inclined grooves and each have a slope that gets closer to the axis of the output rod 2 as it extends downward.

In a case where the cylinder device is subjected to lock driving, as shown in Fig. 2, compressed air in the lock chamber 25 first causes the first piston 21 to move up the output rod 2. This causes (i) the force multiplier 36 to be changed to an initial state of force multiplication driving and (ii) the clamping member 55 to be rapidly rotated clockwise. And, when a push bolt 58, provided at a right end of the clamping member 55, makes contact with an upper side of a workpiece (not illustrated) so that a high load acts on the output rod 2, the compressed air in the lock chamber 25 strongly pushes up the output rod 2 via the second piston 22 and the engaging balls 40 of the force multiplier 36. This causes the clamping member 55 to be strongly driven clockwise.

It should be noted that as explained above in the first embodiment, release driving of the cylinder device is carried out by executing the steps of the procedure for lock driving in reverse order.

The second embodiment can be altered as follows.

Specifically, the output rod 2 has a lower portion projecting downward from the lower end wall 1b, and the projecting portion is hermetically inserted in the lower end wall 1b. Moreover, the projecting portion has a lower part coupled to a detected part via which an operating state of the cylinder device is detected by a sensor which faces the detected part. An example of the sensor is a limit switch.

A third embodiment shown in Figs. 3A through 3D and Fig. 4 is an example cylinder device having a swivel clamping mechanism for fixing an object to be fixed (not illustrated) such as a workpiece.

A structure of the cylinder device will be first described with reference to Fig. 3A (release state).

The housing 1 has a barrel part 1c. The barrel part 1c has a first cylinder hole 11 and a second cylinder hole 12 formed so that the second cylinder hole 12 is located above the first cylinder hole 11. A first piston 21 for rod is inserted in the first cylinder hole 11 and a second piston 22 for force multiplication is inserted in the second cylinder hole 12. A first release chamber 31 is arranged below the first piston 21, and a second release chamber 32 is arranged above the second piston 22. The force multiplier 36 is arranged in the second release chamber 32.

That is, according to the third embodiment, the first piston 21, the second piston 22, and the force multiplier 36 are provided upside down, as compared with those of the first and second embodiments.

More specifically, in the drawings of the first and second embodiments, the output rod 2 has one axial end side serving as a first end side and the other axial end side serving as a second end side, with the first end side above the second end side, i.e., with the second end side below the first end side. In contrast, in the drawings of the third embodiment, the output rod 2 has one axial end side serving as a first end side and the other axial end side serving as a second end side, with the first end side below the second end side, i.e., with the second end side above the first end side.

The housing 1 has a lower end wall (first end wall) 1b in which a lower hole 7 is provided, and has an upper end wall (second end wall) 1a in which an upper hole 5 is provided. The output rod 2 has a lower rod part 2b so supported in the lower hole 7 as to be movable vertically and rotatable on its axis. The output rod 2 has an upper rod part 2a so hermetically supported in the upper hole 5 as to be movable vertically and rotatable on its axis. The output rod 2 has a projecting portion projecting upward from the upper end wall 1a, with a clamping member 55 (see Figs. 3B through 3D) attached to the projecting portion by a nut 61, the clamping member 55 being constituted by a cantilever arm.

It should be noted that the output rod 2 has a rod main body 2c formed to be larger in diameter than the upper rod part 2a.

A guide mechanism 62 is provided for the lower end wall 1b and the lower rod part 2b. The guide mechanism 62 is of a publicly known structure configured as follows (for example, see Japanese Patent Application Publication, Tokukai, No. 2004-1163 A):
The lower rod part 2b has a plurality of guide grooves 63 which (only one of which is illustrated here) are arranged at regular intervals circumferentially. Each of the guide grooves 63 is constituted by helical swivel grooves 63a and a straight groove 63b which are vertically concatenated so that the straight groove 63b is located above the helical swivel grooves 63a (see Fig. 3B). Guide balls 64 fitted in the respective guide grooves 63 are inserted in through-holes 66 of a cylindrical member 65 which projects upward from the lower end wall 1b. A rotating sleeve 67 is fitted on the plurality of guide balls 64.

As shown mainly in the enlarged view of Fig. 4, the force multiplier 36 is configured as follows. Note that the left half of Fig. 4 shows a release state and the right half of Fig. 4 shows a locked state.

The transmitting portions 37 are formed in a stepped portion 69 provided between the upper rod part 2a and the rod main body 2c. That is, four depressions 43 (only one of which is illustrated in Fig. 4) are formed in the stepped portion 69 at substantially regular intervals circumferentially, and the bottom walls of the depressions 43 constitute the respective transmitting portions 37. Each of the transmitting portions 37 is inclined so as to get closer to the axis of the output rod 2 as it extends upward.

Furthermore, in the upper end wall (second end wall) 1a of the housing 1, a receiving sleeve 71 is stopped by a pin 72 from rotating. The receiving portions 38 are formed in a lower part of the receiving sleeve 71. The receiving portions 38 are each constituted by a bottom wall of a groove. Moreover, each of the receiving portions 38 has an inner inclined wall 74 and an outer inclined wall 75 both of which get closer to the axis of the output rod 2 as they extend downward.

Note that the stopper 49 provided in the barrel part 1c of the housing 1 is constituted by a retaining ring.

The cylinder device thus configured operates as follows:
In the release state shown in Fig. 3A, compressed air is discharged out of the lock chamber 25, and compressed air is supplied into the first release chamber 31 and the second release chamber 32. This causes (i) the compressed air in the second release chamber 32 to push the second piston 22 downward, and (ii) the compressed air in the first release chamber 31 to push the first piston 21 upward.

This causes the clamping member 55 to be changed to a retreating state by swiveling.

In a case where the cylinder device is subjected to lock driving, (i) the compressed air is discharged out of the first release chamber 31 and the second release chamber 32 and (ii) compressed air is supplied into the lock chamber 25, in the release state shown in Fig. 3A.

Then, the compressed air in the lock chamber 25 pushes (i) the first piston 21 downward so as to cause the output rod 2 to move down with a low-load and (ii) the second piston 22 upward. In response thereto, as shown in Fig. 3B, (i) the guide balls 64 cause the output rod 2 and the clamping member 55 to move down with a low load, while swiveling them via the helical grooves 63a and (ii) the wedge space 39 concurrently starts to be formed between the transmitting portions 37 provided in the stepped portion 69 of the output rod 2 and the receiving portions 38 provided in the receiving sleeve 71.

Next, as shown in Fig. 3C (initial state of force multiplication driving), the guide balls 64 causes the output rod 2 to move straight down, via the straight grooves 63b of the guide grooves 63, with a low load. And, when a high load acts on the output rod 2 because a lower surface of a right portion of the clamping member 55 is received by a workpiece (not illustrated), an upward thrust of the second piston 22 causes the force-multiplying portion 41 to push the engaging balls 40 radially inward. This causes the upward thrust of the second piston 22 to be subjected to a force-multiplying transformation in which the upward thrust is transformed into a downward thrust via the force-multiplying portion 41, the engaging balls 40, the receiving portions 38, and the transmitting portions 37. In consequence, the output rod 2 is strongly driven downward.

After that, as shown in Fig. 3D (locked state at a final stage of force multiplication driving), the second piston 22 strongly pushes, downward via the engaging balls 40 of the force multiplier 36, the output rod 2 which has been prevented by the workpiece (not illustrated) from moving down. For this reason, a resultant of a downward force exerted by the force multiplier 36 and a downward force exerted by the first piston 21 causes the output rod 2 to strongly press the workpiece against a fixed base (not illustrated) such as table via the clamping member 55.

In a case where the cylinder device is changed from the locked state shown in Fig. 3D to the release state shown in Fig. 3A, (i) the compressed air is discharged out of the lock chamber 25 and (ii) compressed air is supplied into the first release chamber 31 and the second release chamber 32, in the state shown in Fig. 3D. This causes the cylinder device to be changed to the release state by executing the steps of the procedure for lock driving in reverse order.

An angle of inclination of each of the transmitting portions 37 with respect to the axis of the output rod 2 preferably ranges from 20 degrees to 60 degrees, and more preferably ranges from 25 degrees to 45 degrees. An angle of inclination of the force-multiplying portion 41 with respect to the axis of the output rod 2 preferably ranges from 8 degrees to 15 degrees. These points also apply to each of the embodiments which are early described.

The third embodiment can be altered as follows:
The guide mechanism 62 is of course not limited to the exemplified structure. Instead of the exemplified balls 64, cylindrical pins, for example, can be employed as guide members to be fitted in the guide grooves 63. Note that the rotating sleeve 67 can be omitted.

The bottom walls of the grooves, by which bottom walls the receiving portions 38 are constituted, can be constituted by horizontal walls alone.

The third embodiment can be configured so that (i) the output rod 2 has a lower portion projecting downward from the lower end wall 1b, (ii) the projecting portion is hermetically inserted in the lower end wall 1b, (iii) the projecting portion has its lower part coupled to a detected part via which an operating state of the cylinder device is detected by a sensor which faces the detected part. Examples of the sensor encompass a limit switch.

Fig. 5 shows a modification of the force multiplier 36 and corresponds to the release state shown in the left half of Fig. 4.

In this case, the press portion 48 of the second piston 22 has a circular arc cross-section. Further, each of the receiving portions 38 is constituted by an inclined surface that gets closer to the axis of the output rod 2 as it extends upward.

Furthermore, each of the embodiments and the modification can be altered as follows:
It is possible to provide a return spring, instead of or in addition to the first and second release chambers 31 and 32 each of which is configured so as to supply and discharge a pressurized fluid for releasing.

The first and second release chambers 31 and 32 can be connected to each other using a communicating hole provided in the barrel part 1c of the housing 1 or using piping provided outside the housing 1, instead of using the communicating hole 34 provided in the output rod 2.

The number of the transmitting portions 37 which are to be provided circumferentially is preferably three or four, but can be alternatively two or not less than five. Similarly, the number of the receiving portions 38 which are to be provided circumferentially is preferably three or four, but can be alternatively two or not less than five. Furthermore, the transmitting portions 37 can be formed on a surface of a member not having such depressions, instead of being formed in depressions as illustrated above. Similarly, the receiving portions 38 can be formed on a surface of a member not having such grooves, instead of being formed in grooves as illustrated above.

The engaging members 40 are not limited to the engaging balls illustrated above, provided that they engage in the wedge space 39, and can therefore be rollers or the like. The number of the engaging members 40 which are to be provided is preferably three or four, but can be alternatively two or not less than five.

A pressurized fluid to be used in the cylinder device of the present invention can be pressurized gas, pressurized oil, or the like, instead of being pressurized air as exemplified above.

## Claims

1. A cylinder device, having a force multiplier, comprising (i) an output rod (2) inserted in a housing (1) so as to be movable axially, (ii) a first piston (21) for rod, the first piston (21) being coupled to the output rod (2) in the housing (1), and (iii) a second piston (22) for force multiplication,
wherein the second piston (22) is arranged in the housing (1) in tandem with the first piston (21), the second piston (22) being fitted on the output rod (2) so as to be movable axially, said cylinder device being configured such that in lock driving of the output rod (2), (a) the first piston (21) drives the output rod (2) during a low-load stroke and (b) the second piston (22) carries out force multiplication driving with respect to the output rod (2) by use of the force multiplier (36) during a high-load stroke that follows the low-load stroke,
said cylinder device, further comprising:
a lock chamber (25), arranged between the first piston (21) and the second piston (22), into and out of which a pressurized fluid is supplied and discharged, such that the first piston (21) and the second piston (22) are pushed in such directions as to be away from each other;
a first release chamber (31) arranged such that the first piston (21) is pushed toward the second piston (22); and
a second release chamber (32) arranged such that the second piston (22) is pushed toward the first piston (21),
the force multiplier (36) having engaging members (40) which are mounted between the output rod (2) and the second piston (22),
the force multiplier (36) causing, during the high-load stroke, (i) a first force, with which a pressurized fluid supplied into the lock chamber (25) pushes the second piston (22) in the direction away from the first piston (21), to be reversed via the engaging members (40) to be a second force getting toward the first piston (21) and (ii) the second force to be subjected to force multiplication so as to be transmitted to the output rod (2).

2. The cylinder device having the force multiplier as set forth in claim 1, wherein:
the force multiplier (36) includes (i) a wedge space (39) which has an annular shape and is formed between a transmitting portion (37) provided in the output rod (2) and a receiving portion (38) provided in the housing (1) during the force multiplication driving so as to get narrower as it extends radially inward and in which the engaging members (40) are put at predetermined intervals circumferentially, and (ii) a press portion (48) provided so as to push out the engaging members (40) toward the wedge space (39) at a start of the force multiplication driving.

3. The cylinder device having the force multiplier as set forth in claim 2, wherein the force multiplier (36) includes a force-multiplying portion (41) which is provided in the second piston (22) so as to push the engaging members (40) radially inward.

4. The cylinder device having the force multiplier as set forth in claim 3, wherein the press portion (48) is configured such that a force with which the press portion (48) pushes the engaging members (40) radially inward is smaller than a force with which the force-multiplying portion (41) pushes the engaging members (40) radially inward.

5. The cylinder device having the force multiplier as set forth in claim 4, wherein the force-multiplying portion (41) is constituted by an inclined surface and the press portion (48) is constituted by an inclined surface or a circular arc surface.

6. The cylinder device having the force multiplier as set forth in claim 1, wherein a pressurized fluid is supplied into and discharged out of the first release chamber (31) and the second release chamber (32).

7. The cylinder device having the force multiplier as set forth in claim 1, wherein the engaging members (40) are balls.

8. The cylinder device having the force multiplier as set forth in claim 6, wherein the output rod (2) has a communicating hole (34) via which the first release chamber (31) and the second release chamber (32) are connected to each other, the communicating hole (34) being provided in the output rod (2).

9. The cylinder device having the force multiplier as set forth in claim 2, wherein the transmitting portion (37) is constituted by a bottom wall of a depression (43) provided in an outer circumferential surface of the output rod (2).

10. The cylinder device having the force multiplier as set forth in claim 2, wherein the receiving portion (38) is provided in an end wall (1a or 1b) of the housing (1).

11. The cylinder device having the force multiplier as set forth in claim 1, wherein a clamping member (55) is coupled to the output rod (2).

## Patentansprüche

1. Zylindervorrichtung mit Kraftverstärker, umfassend (i) eine Ausgangsstange (2), die so in ein Gehäuse (1) eingeführt ist, dass sie axial beweglich ist, (ii) einen ersten Kolben (21) für Stange, wobei der erste Kolben (21) mit der Ausgangsstange (2) im Gehäuse (1) verbunden ist, und (iii) einen zweiten Kolben (22) für Kraftverstärkung, wobei
der zweite Kolben (22) und der erste Kolben (21) im Gehäuse (1) hintereinander angeordnet sind, wobei der zweite Kolben (22) so an der Ausgangsstange (2) angebracht ist, dass er axial beweglich ist, und die Zylindervorrichtung so gestaltet ist, dass beim Sperrantrieb
der Ausgangsstange (2) (a) der erste Kolben (21) die Ausgangsstange (2) während eines Niedriglasthubs antreibt und (b) der zweite Kolben (22) durch Nutzung des Kraftverstärkers (36) während eines Hochlasthubs, der einem Niedriglasthub folgt, in Bezug auf die Ausgangsstange (2) einen Kraftverstärkungsantrieb ausführt,
wobei die Zylindervorrichtung ferner umfasst:
eine Schleusenkammer (25), die zwischen dem ersten Kolben (21) und dem zweiten Kolben (22) angeordnet ist, in die und aus der ein druckführendes Fluid eingeführt bzw. abgegeben wird, sodass der erste Kolben (21) und der zweite Kolben (22) in solche Richtungen gedrückt werden, dass sie voneinander entfernt sind;
eine erste Freigabekammer (31), die so angeordnet ist, dass der erste Kolben (21) in Richtung des zweiten Kolbens (22) gedrückt wird; und
eine zweite Freigabekammer (32), die so angeordnet ist, dass der zweite Kolben (22) in Richtung des ersten Kolbens (21) gedrückt wird,
wobei der Kraftverstärker (36) Formschlussglieder (40) hat, die zwischen der Ausgangsstange (2) und dem zweiten Kolben (22) eingesetzt sind,
wobei der Kraftmultiplikator (36) während des Hochlasthubs (i) bewirkt, dass eine erste Kraft, mit der ein druckführendes Fluid, das in die Schleusenkammer (25) eingeführt wird, den zweiten Kolben (22) in der weg vom ersten Kolben (21) zeigenden Richtung schiebt, über die Formschlussglieder (40) umgekehrt wird, um eine zweite Kraft zu sein, die in Richtung des ersten Kolbens (21) geht, und (ii) bewirkt, dass die zweite Kraft einer Kraftverstärkung unterworfen wird, um so auf die Ausgangsstange (2) übertragen zu werden.

2. Zylindervorrichtung mit Kraftverstärker gemäß Anspruch 1, wobei:
der Kraftverstärker (36) (i) einen Keilraum (39) beinhaltet, der ringförmig ist und zwischen einem übertragenden Abschnitt (37) in der Ausgangsstange (2) und einem aufnehmenden Abschnitt (38) im Gehäuse (1) während des Kraftverstärkungsantriebs so gebildet wird, dass er radial nach innen hin schmaler wird, und in dem die Formschlussglieder (40) in festgelegten Abständen umlaufend eingesetzt sind, und (ii) einen Druckabschnitt (48) beinhaltet, der vorgesehen ist, um die Formschlussglieder (40) zu Beginn des Kraftverstärkungsantriebs nach außen in Richtung des Keilraums (39) zu drücken.

3. Zylindervorrichtung mit Kraftverstärker gemäß Anspruch 2, wobei der Kraftverstärker (36) einen Kraftverstärkungsabschnitt (41) enthält, der im zweiten Kolben (22) vorgesehen ist, um die Formschlussglieder (40) radial nach innen zu drücken.

4. Zylindervorrichtung mit Kraftverstärker gemäß Anspruch 3, wobei der Druckabschnitt (48) so gestaltet ist, dass eine Kraft, mit der der Druckabschnitt (48) die Formschlussglieder (40) radial nach innen drückt, kleiner ist als eine Kraft, mit der der Kraftverstärkungsabschnitt (41) die Formschlussglieder (40) radial nach innen drückt.

5. Zylindervorrichtung mit Kraftverstärker gemäß Anspruch 4, wobei der Kraftverstärkungsabschnitt (41) aus einer geneigten Fläche besteht und der Druckabschnitt (48) aus einer geneigten Fläche oder einer ringförmigen Bogenfläche besteht.

6. Zylindervorrichtung mit Kraftverstärker gemäß Anspruch 1, wobei ein druckführendes Fluid in die erste Freigabekammer (31) und die zweite Freigabekammer (32) eingeführt bzw. aus ihr abgegeben wird.

7. Zylindervorrichtung mit Kraftverstärker gemäß Anspruch 1, wobei die Formschlussglieder (40) Kugeln sind.

8. Zylindervorrichtung mit Kraftverstärker gemäß Anspruch 6, wobei die Ausgangsstange (2) eine Verbindungsöffnung (34) hat, über die die erste Freigabekammer (31) und die zweite Freigabekammer (32) miteinander verbunden sind, wobei die Verbindungsöffnung (34) in der Ausgangsstange (2) vorgesehen ist.

9. Zylindervorrichtung mit Kraftverstärker gemäß Anspruch 2, wobei der übertragende Abschnitt (37) aus einer unteren Wand einer Vertiefung (43) in einer äußeren Umfangsfläche der Ausgangsstange (2) besteht.

10. Zylindervorrichtung mit Kraftverstärker gemäß Anspruch 2, wobei der aufnehmende Abschnitt (38) in einer Endwand (1a oder 1b) des Gehäuses (1) vorgesehen ist.

11. Zylindervorrichtung mit Kraftverstärker gemäß Anspruch 1, wobei ein Klemmelement (55) mit der Ausgangsstange (2) verbunden ist.

## Revendications

1. Dispositif de cylindre, ayant un multiplicateur de force, comprenant (i) une tige sortie (2) insérée dans un logement (1) de sorte à être mobile axialement, (ii) un premier piston (21) pour la tige, le premier piston (21) étant couplé à la tige de sortie (2) dans le logement (1), et (iii) un deuxième piston (22) pour une multiplication de la force, dans lequel
le deuxième piston (22) est agencé dans le logement (1) en tandem avec le premier piston (21), le deuxième piston (22) étant monté sur la tige de sortie (2) de sorte à être mobile axialement,
ledit dispositif de cylindre étant configuré de telle sorte qu'en entraînement de verrouillage de la tige de sortie (2), (a) le premier piston (21) entraîne la tige de sortie (2) durant une course à faible charge et (b) le deuxième piston (22) effectue un entraînement à multiplication de force par rapport à la tige de sortie (2) grâce à l'utilisation du multiplicateur de force (36) durant une course à charge élevée qui fait suite à la course à faible charge,
ledit dispositif de cylindre, comprenant en outre :
une chambre de verrouillage (25), agencée entre le premier piston (21) et le deuxième piston (22), dans laquelle et hors de laquelle un fluide pressurisé est amené et déchargé, de telle sorte que le premier piston (21) et le deuxième piston (22) sont poussés dans des directions telles qu'ils sont écartés l'un de l'autre ;
une première chambre de libération (31) agencée de telle sorte que le premier piston (21) est poussé vers le deuxième piston (22) ; et
une deuxième chambre de libération (32) agencée de telle sorte que le deuxième piston (22) est poussé vers le premier piston (21),
le multiplicateur de force (36) ayant des éléments de solidarisation (40) qui sont montés entre la tige de sortie (2) et le deuxième piston (22),
le multiplicateur de force (36) provoquant, durant la course à charge élevée, (i) une première force, avec laquelle un fluide pressurisé amené dans la chambre de verrouillage (25) pousse le deuxième piston (22) dans la direction s'éloignant du premier piston (21), pour être inversée via les éléments de solidarisation (40) afin d'être une deuxième force se rendant vers le premier piston (21) et (ii) la deuxième force à être soumise à une multiplication de force de sorte à être transmise à la tige de sortie (2).

2. Dispositif de cylindre ayant le multiplicateur de force tel qu'énoncé dans la revendication 1, dans lequel :
le multiplicateur de force (36) inclut (i) un espace en coin (39) qui possède une forme annulaire et est formé entre une portion de transmission (37) prévue dans la tige de sortie (2) et une portion de réception (38) prévue dans le logement (1) durant l'entraînement de multiplication de force de sorte qu'il devienne plus étroit au fur et à mesure qu'il s'étend radialement vers l'intérieur et dans lequel les éléments de solidarisation (40) sont mis à des intervalles prédéterminés dans le plan circonférentiel, et (ii) une portion de pression (48) prévue de sorte à faire sortir par poussée les éléments de solidarisation (40) vers l'espace en coin (39) à un commencement de l'entraînement de multiplication de force.

3. Dispositif de cylindre ayant le multiplicateur de force tel qu'énoncé dans la revendication 2, dans lequel le multiplicateur de force (36) inclut une portion à multiplication de force (41) qui est prévue dans le deuxième piston (22) de sorte à pousser les éléments de solidarisation (40) radialement vers l'intérieur.

4. Dispositif de cylindre ayant le multiplicateur de force tel qu'énoncé dans la revendication 3, dans lequel la portion de pression (48) est configurée de telle sorte qu'une force avec laquelle la portion de pression (48) pousse les éléments de solidarisation (40) radialement vers l'intérieur est plus petite qu'une force avec laquelle la portion à multiplication de force (41) pousse les éléments de solidarisation (40) radialement vers l'intérieur.

5. Dispositif de cylindre ayant le multiplicateur de force tel qu'énoncé dans la revendication 4, dans lequel la portion à multiplication de force (41) est constituée d'une surface inclinée et la portion de pression (48) est constituée d'une surface inclinée ou d'une surface en arc circulaire.

6. Dispositif de cylindre ayant le multiplicateur de force tel qu'énoncé dans la revendication 1, dans lequel un fluide pressurisé est amené dans et déchargé hors de la première chambre de libération (31) et de la deuxième chambre de libération (32).

7. Dispositif de cylindre ayant le multiplicateur de force tel qu'énoncé dans la revendication 1, dans lequel les éléments de solidarisation (40) sont des billes.

8. Dispositif de cylindre ayant le multiplicateur de force tel qu'énoncé dans la revendication 6, dans lequel la tige de sortie (2) a un trou de communication (34) via lequel la première chambre de libération (31) et la deuxième chambre de libération (32) sont raccordées l'une à l'autre, le trou de communication (34) étant prévu dans la tige de sortie (2).

9. Dispositif de cylindre ayant le multiplicateur de force tel qu'énoncé dans la revendication 2, dans lequel la portion de transmission (37) est constituée d'une paroi inférieure d'un creux (43) prévue dans une surface circonférentielle extérieure de la tige de sortie (2).

10. Dispositif de cylindre ayant le multiplicateur de force tel qu'énoncé dans la revendication 2, dans lequel la portion de réception (38) est prévue dans une paroi d'extrémité (1a ou 1b) du logement (1).

11. Dispositif de cylindre ayant le multiplicateur de force tel qu'énoncé dans la revendication 1, dans lequel un élément de serrage (55) est couplé à la tige de sortie (2).
